# EUROPEAN PATENT SPECIFICATION

(11) **EP 0 851 440 B1**
(45) Date of publication and mention of the grant of the patent: **28.06.2000**
(21) Application number: 97122782.2
(22) Date of filing: 23.12.1997
(51) Int. Cl.: H01F 38/14, H02J 5/00

(54) **Noncontacting power transfer device**
Berührungslose Leistungsübertragungsvorrichtung
Dispositif de transfert de puissance sans contact

(30) Priority: 24.12.1996 JP 34283796
(43) Date of publication of application: 01.07.1998
(73) Proprietor: MATSUSHITA ELECTRIC WORKS, LTD., Kadoma-shi Osaka 571 (JP)
(72) Inventor: Tamura, Hideki, Moriyama-shi, Shiga (JP); Yamashita, Mikihiro, Hikone-shi, Shiga (JP); Katsura, Yoshinori, Hikone-shi, Shiga (JP)
(74) Representative: Pellmann, Hans-Bernd, Dipl.-Ing.

(56) References cited:
- EP-A- 0 357 829
- US-A- 4 761 724
- US-A- 5 428 521

## Description

The present invention relates to a noncontacting power transfer device which can supply power from a power source body to an appliance body through electromagnetic induction therebetween in a small-sized electric appliance such as a charging device and electric tooth brush, in which the power source body for supplying power and the appliance body having load are designed so as to be removal from each other.

An example of previously known noncontacting power transfer devices is disclosed in Japanese Patent Publication No. Hei. 6-311658. In such a device, a signal to be detected when an appliance is mounted on a power supply body is created by the signal produced from a primary coil in a state where the output from a primary side oscillation circuit is sufficiently suppressed.

In the above conventional noncontacting power transfer device, the intermittent time of oscillation by an intermittent driving/oscillation means is set using a timer. But such time setting by the timer requires the means of a timer IC so that cost of components becomes expensive correspondingly. Further, since an oscillation period is always set constant irrespectively of a change in the input voltage, the level of a signal detected for an appliance body is not stable. Specifically, where only a low voltage is input owing to circumstances of power, the detected signal level is low, whereas a high input voltage leads to a high level of detected signal.

Document US 4 761 724 discloses a transformer coupling for transmitting direct current through a barrier, wherein direct current from an energy source on one side of an electrical and mechanical barrier is transmitted to a load on the other side of the barrier by utilizing a transformer. The primary and secondary windings are arranged on respective cores of the transformer which are magnetically coupled. For effecting the magnetic coupling, the direct current input is fed through a self-excited oscillator circuit, connected to the winding of the primary transformer core so as to create a time varying magnetic field, which magnetic field is passed through the barrier to a winding on the secondary transformer core with the winding being tuned to the frequency of the field. The secondary side comprises a rectifying diode and a smoothing capacitor so that the output from the secondary winding is rectified, filtered and used to supply the output load. Furthermore, the voltage is subject to a specific voltage regulation.

Accordingly, it is the object of the present invention to solve the above problem and to provide a stable intermittent driving/oscillation means economically.

This object is accomplished according to the present invention by a noncontacting power transfer device for supplying power from a power supply body to an appliance body as claimed in appended claim 1.

According to the present invention, in a noncontacting power transfer device a primary winding T₁ is intermittently oscillation-driven as an oscillation winding and a driving signal thus created is used as a signal for detecting the appliance body B, and a response signal receiving circuit X of a power supply body A receives a response signal from a response signal circuit Y of an appliance body B to detect the appliance body. An intermittently driving means M in said power supply body includes a secondary winding T2 wound on the same core as the primary winding T₁ and a diode D₁ and capacitor C₂ for rectifying/smoothing the voltage induced in the secondary winding as an induction winding, and a control transistor Q₂ operated by an output voltage from the intermittent driving means M is connected to the control end of an oscillation transistor Q₁ so that the oscillation transistor Q₁ is intermittently driven by the intermittent voltage.

An explanation will be given of the operation of the noncontacting power transfer device according to the present invention.

The output from a secondary winding T₂ induced by a primary winding T₁ is smoothed by a capacitor C₂ after its rectifying. When an output voltage V₁ reaches a predetermined voltage, a control transistor Q₂ turns on to stop oscillation. Then, since the voltage induced in the secondary winding T₂ disappears, the output voltage V₁ gradually decreases to turn off the control transistor Q₂.

When the control transistor Q₂ turns off, the capacitor C₁ stores charges through a resistor R₁. Then, the base voltage V_{G} of an oscillation transistor Q₁ increases so that it operates again to start oscillation. Such an operation is repeated successively to provide an intermittent driving state.

Next, when an appliance body B is applied to a power source body A, energy by the above intermittent driving induces a voltage in the appliance body B. Thus, a response signal circuit Y for the appliance body B outputs a response signal. When the output from the response signal circuit Y is supplied to a response signal receiving circuit X of the power source body A, the transistor Q₃ turns on and the control transistor Q₂ turns off, thus resulting in continuous oscillation. Incidentally, a resistor R₃ serves to suppress the storage of charges into the capacitor C₂ to retard the increase in the output voltage V₁, thereby controlling the oscillation period of the intermittent driving.

Where the input voltage is low, the voltage induced in the secondary winding T₂ is low so that the output V₁ rises slowly. As a result, the oscillation period of the intermittent driving becomes long. Where the input voltage is high, the oscillation period of the intermittent driving becomes short, certain energy is sent out as a detection signal.

In the accompanying drawings:
Fig. 1 is an electric circuit diagram of the noncontacting power transfer device according to the present invention; and
Figs. 2(A) to 2(C) are operation waveform charts according to the present invention, Fig. 2(A) shows the oscillation voltage V_{C} of the oscillating winding T₁, Fig. 2(B) shows output voltage V₁, and Fig. 2(C) shows the base voltage V_{G} of the oscillation transistor Q₁ for elapse of time, respectively.

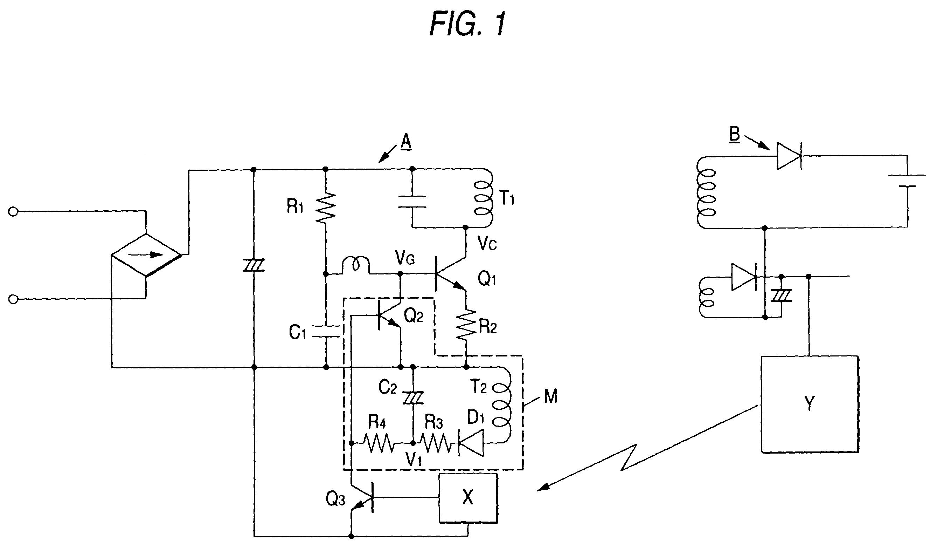

Now referring to the drawings, an explanation will be given of a concrete embodiment of the noncontacting power transfer device. Fig. 1 is an electric circuit diagram of the noncontacting power transfer device according to the present invention. In Fig. 1, symbol A denotes a power source body; B an appliance body; T₁ a primary winding (hereinafter referred to as "oscillation winding"; T₂ a secondary winding (hereinafter referred to as "induction winding") wound on the same core (not shown) as the primary winding; C₁, C₂ capacitors; D₁ a diode; Q₁ an oscillation transistor; Q₂ a control transistor; Q₃ a transistor connected to the base of the control transistor Q₂; R₁, R₂, R₃ resistors; V_{G} a base voltage of the oscillation transistor Q₁; X a response signal receiving circuit; and Y a response signal circuit.

An explanation will be given of the operation of the noncontacting power transfer device according to the present invention. In the electric circuit diagram shown in Fig. 1, the basic oscillation operation, which is the same as in the prior art, will not be explained. For intermittent driving, the induction winding T₂ is wound on the same core (not shown) as the oscillation winding T₁.

The output from a secondary winding T₂ is rectified by the diode D₁ and smoothed by the capacitor C₂. When the output voltage V₁ reaches a predetermined voltage, the control transistor Q₂ turns on to stop oscillation. Then, since the voltage induced in the secondary winding T₂ disappears, the output voltage V₁ gradually decreases to turn off the control transistor Q₂.

When the control transistor Q₂ turns off, the capacitor C₁ stores charges through the resistor R₁. Then, the base voltage V_{G} of an oscillation transistor Q₁ increases so that it operates again to start oscillation. Such an operation is repeated successively to provide an intermittent driving state.

Next, when the appliance body B is applied to the power source body A, energy by the above intermittent driving induces a voltage in the appliance body B. Thus, the response signal circuit Y for the appliance body B outputs a response signal. When the output from the response signal circuit Y is supplied to a response signal receiving circuit X of the power source body, the transistor Q₃ turns on and the control transistor Q₂ turns off, thus resulting in continuous oscillation. Incidentally, the resistor R₃ serves to suppress the storage of charges into the capacitor C₂ to retard the increase in the output voltage V₁, thereby controlling the oscillation period of the intermittent driving. Where the input voltage is low, the voltage induced in the secondary winding T₂ is low so that the output V₁ rises slowly. As a result, the oscillation period of the intermittent driving becomes long. Where the input voltage is high, the oscillation period of the intermittent driving becomes short, certain energy is sent out as a detection signal.

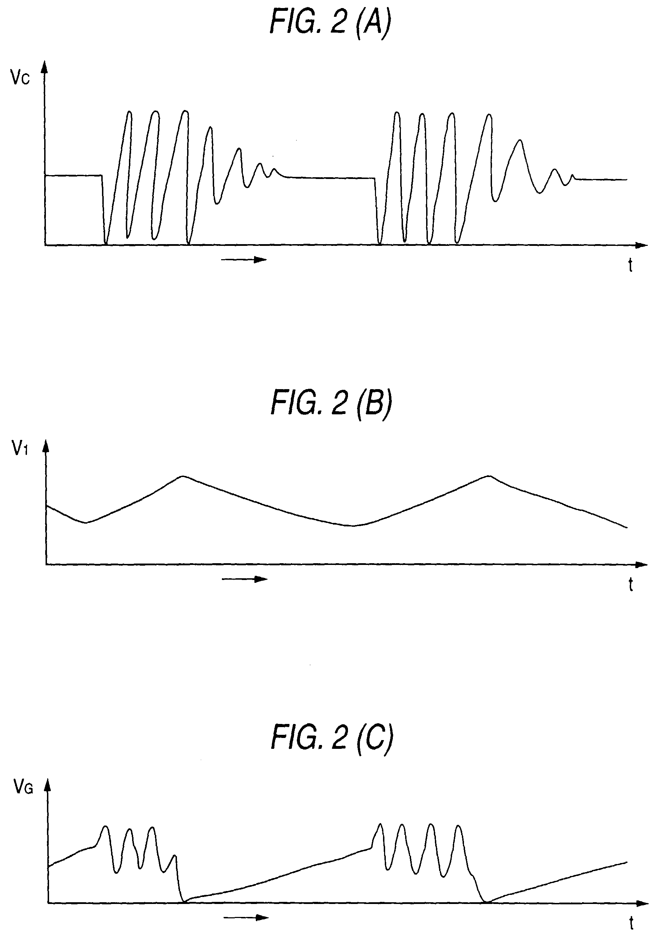

Figs. 2(A) to 2(C) are operation waveform charts according to the present invention. Fig. 2(A) shows the oscillation voltage V_{C} of the oscillating winding T₁, Fig. 2(B) shows output voltage V₁, and Fig. 2(C) shows the base voltage V_{G} of the oscillation transistor Q₁ for elapse of time, respectively.

As described above, in the noncontacting power transfer device according to the present invention, the oscillation winding T₁ is intermittently oscillation-driven and the resultant driving signal is used as a signal for detecting the appliance body B. The power supply body A receives the response signal from the appliance body B to detect the appliance body B. The intermittent driving means M includes the induction winding T₂ wound on the same core as the oscillation winding T₁ and the diode D₁ and capacitor C₂ for rectifying/smoothing the voltage induced in the induction winding T₂. The control transistor Q₂ operated by the output voltage V₁ of the intermittent driving means M is connected to the control end of the oscillation transistor Q₁ so that the oscillation transistor Q₁ is intermittently driven by the oscillation voltage V_{C}. In this way, a stabilized intermittent driving of the transistor can be executed.

The noncontacting power transfer device according to the present invention, although it has a very simple circuit configuration, permits a stabilized driving operation and can effectively send certain energy as a detection signal according to an input voltage.

A primary winding T₁ as anoscillation winding T₁ is intermittently oscillation-driven and the resultant driving signal is used as a signal for detecting an appliance body B. A power supply body A receives the response signal from the appliance body B to detect the appliance body B. An intermittent driving means M includes the induction winding T₂ wound on the same core as the oscillation winding T₁ and a diode D₁ and capacitor C₂ for rectifying/smoothing the voltage induced in the induction winding T₂. A control transistor Q₂ operated by the output voltage V₁ of the intermittent driving means M is connected to the control end of an oscillation transistor Q₁ so that the oscillation transistor Q₁ is intermittently driven by an oscillation voltage V_{C}.

## Claims

1. A noncontacting power transfer device for supplying power from a power supply body (A) to an appliance body (B) having a response signal circuit, comprising:
a primary winding (T₁) as an oscillation winding, said primary winding (T₁) having a core and being accomodated in the power supply body (A);
an oscillation transistor (Q₁) for oscillation-driving said primary winding (T₁); and
intermittently driving means (M) provided in said power supply body (A) for intermittently oscillation-driving said primary winding (T₁) so as to create a signal for detecting the appliance body (B), wherein said power supply body (A) receives a response signal which is output from the response signal circuit when the appliance body (B) receives the signal for detecting the appliance body (B);
wherein said intermittently driving means (M) is characterized by:
a secondary winding (T₂) wound on the same core as said primary winding (T₁);
a diode (D₁) for rectifying voltage induced by said secondary winding (T₂);
a capacitor (C₂) for smoothing the voltage induced by said secondary winding (T₂); and
a control transistor (Q₂) operated by the voltage rectified and smoothed by said diode (D₁) and capacitor (C₂) so as to create an intermittent voltage,
wherein said control transistor (Q₂) is connected to a control end of said oscillation transistor (Q₁) so that said oscillation transistor (Q₁) is intermittently driven by the intermittent voltage of said control transistor (Q₂).

## Patentansprüche

1. Berührungslose Energieübertragungsvorrichtung zur Energiezuführung von einem Energieversorgungsgrundgerät (A) zu einem eine Antwortsignalschaltung aufweisenden Zubehörgerät (B), mit:
einer Primärwicklung (T₁) als einer Schwingungswicklung, wobei die Primärwicklung (T₁) einen Kern aufweist und in dem Energieversorgungsgrundgerät (A) angeordnet ist,
einem Schwingungstransistor (Q₁) zur Schwingungsansteuerung der Primärwicklung (T₁), und
einer in dem Energieversorgungsgrundgerät (A) vorgesehenen intermittierend ansteuernden Einrichtung (M) zur Ansteuerung der Primärwicklung (T₁) mit einer intermittierenden Schwingung, so daß ein Signal zur Erfassung des Zubehörgeräts (B) erzeugt wird, wobei das Energieversorgungsgrundgerät (A) ein Antwortsignal empfängt, das von der Antwortsignalschaltung ausgegeben wird, wenn das Zubehörgerät (B) das Signal zur Erfassung des Zubehörgeräts (B) empfängt,
wobei die intermittierend ansteuernde Einrichtung (M) gekennzeichnet ist, durch:
eine auf dem gleichen Kern wie die Primärwicklung (T₁) gewickelte Sekundärwicklung (T₂),
eine Diode (D₁) zur Gleichrichtung einer durch die Sekundärwicklung (T₂) induzierten Spannung,
einen Kondensator (C₂) zur Glättung der durch die Sekundärwicklung (T₂) induzierten Spannung, und
einen Steuertransistor (Q₂), der durch die von der Diode (D₁) gleichgerichtete und von dem Kondensator (C₂) geglättete Spannung betrieben wird, so daß eine intermittierende Spannung erzeugt wird,
wobei der Steuertransistor (Q₂) mit einem Steueranschluß des Schwingungstransistors (Q₁) derart verbunden ist, daß der Schwingungstransistors (Q₁) durch die intermittierende Spannung des Steuertransistors (Q₂) intermittierend angesteuert wird.

## Revendications

1. Dispositif de transfert de puissance sans contact destiné à fournir de l'énergie, à partir d'un corps d'alimentation électrique (A), à un corps d'appareil électrique domestique (B) ayant un circuit de signal de réponse, comprenant :
un enroulement primaire (T₁) tel qu'un enroulement oscillant, ledit enroulement primaire (T₁) ayant un noyau et étant logé dans le corps d'alimentation électrique (A);
un transistor d'oscillation (Q₁) servant à exciter en oscillation ledit enroulement primaire (T₁); et
un moyen d'excitation par intermittence (M) placé dans ledit corps d'alimentation électrique (A) afin d'exciter en oscillation par intermittence ledit enroulement primaire (T₁) et ainsi créer un signal permettant de détecter le corps d'appareil électrique domestique (B), où ledit corps d'alimentation électrique (A) reçoit un signal de réponse qui est délivré par le circuit de signal de réponse lorsque le corps d'appareil électrique domestique (B) reçoit le signal permettant de détecter le corps d'appareil électrique domestique (B);
où ledit moyen d'excitation par intermittence (M) est caractérisé par :
un enroulement secondaire (T₂) bobiné sur le même noyau que ledit enroulement primaire (T₁);
une diode (D₁) servant à redresser la tension induite par ledit enroulement secondaire (T₂);
un condensateur (C₂) servant à lisser la tension induite par ledit enroulement secondaire (T₂); et
un transistor de commande (Q₂) activé par la tension redressée et lissée par ladite diode (T₁) et le condensateur (C₂) de manière à créer une tension intermittente,
où ledit transistor de commande (Q₂) est connecté à une extrémité de commande dudit transistor d'oscillation (Q₁) de sorte que ledit transistor d'oscillation (Q₁) est excité par intermittence par la tension intermittente dudit transistor de commande (Q₂).
